# EUROPÄISCHE PATENTANMELDUNG

(11) **EP 1 335 230 A2**
(43) Veröffentlichungstag der Anmeldung: **13.08.2003**
(21) Anmeldenummer: 02028202.6
(22) Anmeldetag: 14.12.2002
(51) Int. Cl.: G02B 21/06, G02B 21/12

(54) **Beleuchtungseinrichtung für Mikroskope**

(30) Priorität: 11.01.2002 DE 10202870
(71) Anmelder: CARL ZEISS JENA GmbH, 07745 Jena (DE)
(72) Erfinder: Dietrich, Peter, 73447 Oberkochen (DE); Buchheister, Jan, 07743 Jena (DE)
(74) Vertreter: Hampe, Holger

(57) **Zusammenfassung**

Die Erfindung betrifft eine Beleuchtungseinrichtung für Mikroskope bei der eine Halogenlampe mit einem Reflektor und einer sich in Richtung der optischen Achse erstreckenden Wendel und eine Streuscheibe vorgesehen sind, welche ohne zusätzliche optische Komponenten eine homogene Ausleuchtung des Sehfeldes ermöglicht.

## Beschreibung

Die Erfindung betrifft eine Beleuchtungseinrichtung für Mikroskope welche insbesondere für die Hellfeldbeleuchtung geeignet ist.

Eine Beleuchtungseinrichtung für Mikroskope hat die Aufgabe das Sehfeld vollständig und gleichmäßig auszuleuchten. Da praktisch alle verwendeten Lichtquellen eine inhomogene Lichtverteilung im Sehfeld bzw. in den dazu konjugierten Ebenen erzeugen, müssen entsprechende Maßnahmen zur Homogenisierung der Beleuchtung vorgenommen werden.

Üblicherweise werden in der Mikroskopie spezielle Halogenlampen verwendet, deren Wendelflächen senkrecht zur optischen Achse der Beleuchtungseinrichtung angeordnet sind und welche eine möglichst große Leuchtfläche aufweisen, welche allerdings im Allgemeinen rechteckig oder quadratisch ist, also abweichend von der Kreisform des Sehfeldes oder der konjugierten Felder. Es ist bekannt, mit einem geeigneten Reflektor das Bild der Wendelfläche direkt neben die Wendel oder leicht dazu versetzt zu projizieren und so eine Vergrößerung der Leuchtfläche oder eine reduzierte Wendelstrukturierung der Leuchtfläche zu erzeugen. Allerdings genügt die Homogenität der so erhaltenen Beleuchtung häufig immer noch nicht den Anforderungen der Mikroskopie wie sie insbesondere bei Anwendung des Köhlerschen Beleuchtungsprinzips notwendig ist. Es wurden daher eine ganze Reihe von Vorschlägen zur Behebung dieses Nachteils gemacht. Diese bestehen im Allgemeinen darin, spezielle optische Elemente in den Strahlengang einzubringen, welche ihrerseits eine nicht homogen verteilte Lichtdurchlässigkeit aufweisen. Aus der AT-PS 183 246 ist bekannt in den Strahlengang eine mattierte Fläche mit einem kreisringförmigen nichtmattierten Flächenanteil einzubringen. Aus DE 41 02 507 ist eine Deflektorscheibe bekannt, die mehrere gleichmäßig über die gesamte Fläche verteilte Einzelprismen aufweist, welche die Lichtquelle mit mehreren Nebenbildern in die Aperturblendenebene abbildet. Im EP 613 569 wird eine Rasterscheibe mit einem planparallelem, das Licht ungehindert durchtreten lassenden äußeren Bereich und einem kreisförmigen inneren Bereich, welcher als die Lichtquelle mehrfach abbildendes Raster ausgebildet ist, beschrieben. Aus DE 198 32 665 ist bekannt, ein so genanntes Grauverlauf-Filter einzusetzen, welches einen bzgl. seiner Mitte rotationssymmetrischen radialen Grauwertverlauf, bei dem der Absorptionsgrad des Filters zum Rande hin abnimmt, aufweist. Damit wird die im Allgemeinen gemäß dem Cos-Gesetz nach außen hin abfallende Lichtintensität ausgeglichen. Zur Realisierung dieses Grauverlaufes schlägt die Schrift vor, kleine lichtundurchsichtige Flächenelemente auf eine Glasscheibe derart aufzubringen, dass das lokale Flächenverhältnis zwischen den aufgebrachten Flächenelementen und der unbeschichteten Glasscheibe den Transmissionsgrad des Filters bestimmt. Da alle vorgeschlagenen Lösungen immer noch kleinere Restinhomogenitäten der Lichtintensität im Sehfeld erzeugen, ist es üblich zusätzlich eine Streuscheibe zum Verwischen dieser Inhomogenitäten einzusetzen.

Alle diese bekannten Lösungen weisen eine Reihe von Nachteilen auf. So ist die Herstellung dieser Rasterplatten oder Filter aufwendig und damit teuer. Auch die verwendeten speziellen Halogenlampen mit rechteckiger Wendelfläche sind relativ teuer in der Anschaffung. Durch die zusätzlich in den Strahlengang eingebrachten optischen Elemente geht ein erheblicher Teil der Lichtenergie verloren, was zum Einsatz leistungsstärkerer Lampen führt, welche aber ihrerseits eine erhöhte Wärmeabgabe aufweisen und so zusätzliche Maßnahmen zur Abführung dieser Wärme erfordern.

Es ist daher die Aufgabe der Erfindung, die Nachteile des Standes der Technik zu beseitigen und eine leicht zu realisierende homogene Ausleuchtung für Mikroskope anzugeben.

Diese Aufgabe wird erfindungsgemäß durch die Merkmale des 1. Anspruchs gelöst. In den Unteransprüchen sind weitere vorteilhafte Ausgestaltungen der Erfindung angegeben.

Die Erfinder haben überraschend festgestellt, dass auf die im Stand der Technik bekannten speziellen optischen Elemente wie Rasterscheiben, Prismen, Verlaufsfilter verzichtet werden kann und sich lediglich mittels einer handelsüblichen Halogenlampe und einer Streuscheibe eine ausreichend homogene Ausleuchtung realisieren lässt. Eine solche Lampe wird z. B. von der Firma Osram unter dem Namen Decostar 48865 SP hergestellt. Diese Lampen weisen einen angenähert parabelförmigen, aus einzelnen Facetten aufgebauten Reflektor und eine sich längs der optischen Achse erstreckende Wendel auf. Üblicherweise dienen diese Lampen als so genannte Spot-Lampen, welche einen relativ scharf begrenzten Lichtkegel (in diesem Fall 10°) erzeugen. Diese Lampen weisen in einem Abstand von ca. 150 - 210 mm von der Lichtaustrittsöffnung eine Leuchtdichteverteilung mit einer dunkleren Mitte und einem aufgehellten kreisringförmigen Außenbereich auf. Eine geeignet im Strahlengang positionierte Streuscheibe kompensiert erfindungsgemäß diese Leuchtdichteverteilung und führt zu einer homogenen Ausleuchtung des Sehfeldes. Diese Streuscheibe hat damit nicht die im Stand der Technik beschriebene "Verwischungsfunktion" für lokale Inhomogenitäten, sondern ihrerseits eine kompensierende Wirkung auf einen rotationssymmetrischen Leuchtdichteverlauf.

Außerdem kommt die erfindungsgemäße Beleuchtungseinrichtung ohne Kollektoroptik aus, wie üblicherweise für Beleuchtungseinrichtungen nach dem Köhler-Prinzip erforderlich ist.

Die Erfindung wird im Folgenden an Hand bevorzugter Ausführungsbeispiele erläutert.

Es zeigen
Fig. 1: eine schematische Darstellung der erfindungsgemäßen Beleuchtungseinrichtung
Fig. 2: zur Erläuterung eine schematische Darstellung des Strahlverlaufs einer Halogenlampe mit Reflektor und parallel zur optischen Achse ausgerichteter Wendel.

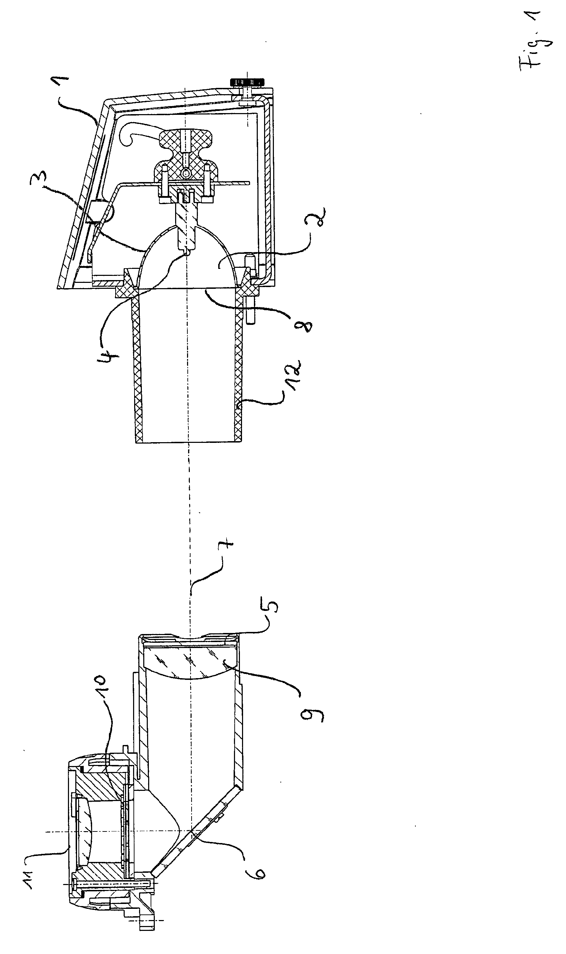

In Fig. 1 ist eine Durchlichtbeleuchtungseinrichtung für ein Mikroskop, bestehend aus einem Lampengehäuse 1, einer Halogenlampe 2 mit einem Reflektor 3 und einer Wendel 4, einer Streuscheibe 5 abgebildet. Ein Umlenkspiegel 6 dient der Einkopplung des Lichtes in das Mikroskop. Die Wendel 4 erstreckt sich entlang der optischen Achse 7 der Lampe 2. In der Nähe der Streuscheibe 5 ist eine Linse 9 angeordnet, welche zur Fokussierung der Leuchtfläche in die Kondensoreingangspupille dient. Im Strahlengang nach dem Umlenkspiegel 6 sind die Leuchtfeldblende 10 und ein als Staubschutz dienendes Abdeckglas 11 vorgesehen. Ein

Rohr 12 dient der Unterdrückung von Streulicht.

In einem ersten Ausführungsbeispiel mit einer Halogenlampe Osram Decostar 48865 SP mit einem Ausstrahlungswinkel von 10° und einem Durchmesser von 51 mm ergibt sich der optimale Abstand zwischen der Austrittsöffnung 8 der Halogenlampe 2 und der Streuscheibe 5 zu 185 mm. Dabei wurde eine Streuscheibe mit einem Durchmesser von 42 mm und einem Halbwertswinkel von 2,5° verwendet.

In einem zweiten Ausführungsbeipiel unter Verwendung einer Halogenlampe Osram Decostar 48865 FL mit einem Ausstrahlungswinkel von 24° und einem Durchmesser von 51 mm ergibt sich bei gleicher Streuscheibencharakteristik der optimale Abstand zu 130 mm.

In einem dritten Ausführungsbeipiel unter Verwendung einer Halogenlampe Osram Decostar 48865 WFL mit einem Ausstrahlungswinkel von 38° und einem Durchmesser von 51 mm ergibt sich bei gleicher Streuscheibencharakteristik der optimale Abstand zu 90 mm.

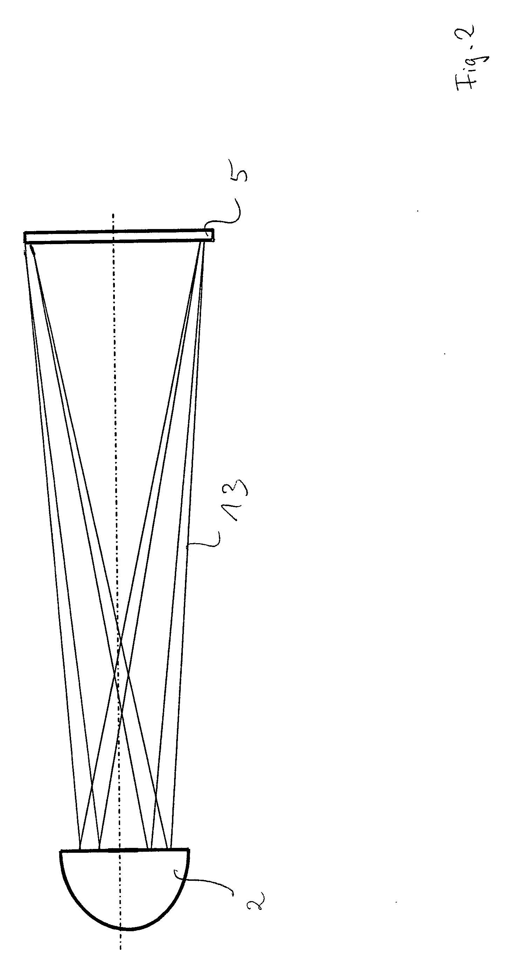

In Fig. 2 sind stark vereinfacht und schematisch die Strahlverhältnisse in der erfindungsgemäßen Beleuchtungseinrichtung dargestellt. Es zeigt sich, dass ausgehend von der Halogenlampe 2 die Lichtstrahlen 13 sich in einem äußeren Bereich des Leuchtkegels konzentrieren, was zu einer Lichtverteilung mit dunklerer Mitte und aufgehelltem Rand führt. Diese Lichtverteilung lässt sich, wie die Erfinder überraschend gefunden haben, in einfacher Weise mit einer Streuscheibe 5 so weit homogenisieren, dass die Anforderungen des Köhlerschen Prinzips an die Qualität der Beleuchtung sehr gut erfüllt sind.

Die Erfindung ist nicht an die dargestellten Ausführungsbeispiele gebunden, für andere als die aufgeführten Halogenlampen können sich auch andere Werte für die optimale Positionierung der Streuscheibe ergeben. Ebenfalls kann die Benutzung einer Streuscheibe mit anderer Charakteristik zu etwas anderen optimalen Positionen führen.

## Patentansprüche

1. Beleuchtungseinrichtung für Mikroskope, welche eine Halogenlampe mit einem Reflektor und eine im Strahlengang der Halogenlampe zwischen den konjugierten Orten des Leuchtfeldes und der Pupille angeordnete Streuscheibe aufweist.

2. Beleuchtungseinrichtung für Mikroskope nach Anspruch 1, wobei die Halogenlampe eine sich in Richtung der optischen Achse des Reflektors erstreckende Wendel aufweist.

3. Beleuchtungseinrichtung für Mikroskope nach Anspruch 1 oder 2, wobei die Halogenlampe einen Abstrahlungswinkel von ca. 10° aufweist und die Streuscheibe mit einem Abstand zwischen 150 und 210 mm von der Lichtaustrittsöffnung der Halogenlampe angeordnet ist.

4. Beleuchtungseinrichtung für Mikroskope nach Anspruch 1 oder 2, wobei die Halogenlampe einen Abstrahlungswinkel von ca. 10° aufweist und die Streuscheibe mit einem Abstand von ca. 185 mm von der Lichtaustrittsöffnung der Halogenlampe angeordnet ist.

5. Beleuchtungseinrichtung für Mikroskope nach Anspruch 1 oder 2, wobei die Halogenlampe einen Abstrahlungswinkel von ca. 24° aufweist und die Streuscheibe mit einem Abstand zwischen 110 und 150 mm von der Lichtaustrittsöffnung der Halogenlampe angeordnet ist.

6. Beleuchtungseinrichtung für Mikroskope nach Anspruch 1 oder 2, wobei die Halogenlampe einen Abstrahlungswinkel von ca. 24° aufweist und die Streuscheibe mit einem Abstand von ca. 130 mm von der Lichtaustrittsöffnung der Halogenlampe angeordnet ist.

7. Beleuchtungseinrichtung für Mikroskope nach Anspruch 1 oder 2, wobei die Halogenlampe einen Abstrahlungswinkel von ca. 38° aufweist und die Streuscheibe mit einem Abstand zwischen 80 und 110 mm von der Lichtaustrittsöffnung der Halogenlampe angeordnet ist.

8. Beleuchtungseinrichtung für Mikroskope nach Anspruch 1 oder 2, wobei die Halogenlampe einen Abstrahlungswinkel von ca. 38° aufweist und die Streuscheibe mit einem Abstand von ca. 90 mm von der Lichtaustrittsöffnung der Halogenlampe angeordnet ist.
